Europäisches Patentamt

European Patent Office

Office européen des brevets

(11) Veröffentlichungsnummer: **0 393 373**
**A2**

(12) **EUROPÄISCHE PATENTANMELDUNG**

(21) Anmeldenummer: 90105377.7

(22) Anmeldetag: 21.03.90

(51) Int. Cl.5: **H04B 10/06**

(30) Priorität: 21.04.89 DE 3913241

(43) Veröffentlichungstag der Anmeldung:
24.10.90 Patentblatt 90/43

(84) Benannte Vertragsstaaten:
**DE FR GB NL**

(71) Anmelder: **Siemens Aktiengesellschaft**
**Wittelsbacherplatz 2**
**D-8000 München 2(DE)**

(72) Erfinder: **Werner, Karl Josef, Dipl.-Ing.**
**Senefelder Strasse 69a**
**D-7000 Stuttgart 1(DE)**

(54) **Optischer Heterodynempfänger.**

(57) Die Erfindung betrifft einen optischen Heterodynempfänger (1000) mit gleichzeitiger Auswertung der Signal- und Spiegelfrequenz, wobei die Lokaloszillatorleistung optimal genutzt wird. In einer optischen Mischstufe (800) wird ein zirkular polarisiertes Lokaloszillatorsignal (2) mit einem linear polarisierten Empfangssignal (1) zu je gleichen Signalanteilen auf zwei optische Mischsignalwege (211, 212, 221) aufgeteilt. In einem Mischsignalweg befindet sich eine Lambdahalbeplatte. In einem Polarisationsstrahlteiler (130) und einer elektronischen Zwischenfrequenzstufe (900) erfolgt die weitere Verarbeitung zu Zwischenfrequenzausgangssignalen (81, 82). Eine Abweichung von der vorgesehenen linearen Polarisation des Empfangssignals (1) verursacht eine berechenbare Verschlechterung der Spiegelfrequenzunterdrückung.

EP 0 393 373 A2

## Optischer Heterodynempfänger

Die Erfindung betrifft eine Vorrichtung zu einem Heterodynempfang mit einer elektronischen Zwischenfrequenzstufe und mit einer optischen Mischstufe, in der ein Signalmischer vorgesehen ist, der mit einem Eingang für ein zumindest näherungsweise linear polarisiertes Empfangssignal zumindest einer Empfangssignalfrequenz und mit einem Lokaloszillator für ein zirkular polarisiertes Lokaloszillatorsignal einer Lokaloszillatorfrequenz verbunden ist, wobei der Signalmischer mit einem Polarisationsmischer über zwei Mischsignalwege für im Signalmischer zu bildende optische Mischsignale verbunden ist mit einem optischen Instrument in einem Mischsignalweg.

Beim optischen Heterodynempfang wird ein zu empfangendes Frequenzband im optischen Frequenzbereich in einen elektronischen Zwischenfrequenzbereich transformiert. Dabei wird das Emfangssignal mit dem Signal von einem Lokaloszillator überlagert. Diese Überlagerung wird auch Mischung genannt. Außer den gewünschten Signalanteilen werden auch die Anteile bei der sog. Spiegelfrequenz in den Zwischenfrequenzbereich heruntergemischt. In jedem Frequenzband des Zwischenfrequenzbereiches existiert bei dieser Überlagerung auch ein Anteil entsprechend den Spiegelfrequenzanteilen im optischen Frequenzbereich.

Zur Nichtbeeinflussung der einzelnen Frequenzbänder muß entweder für ausreichende Abstände der Nachrichtenfrequenzbänder gesorgt werden oder es ist ein Empfangsverfahren anzuwenden, das die Spiegelfrequenzanteile unterdrückt. Dabei werden gleichzeitig Signalfrequenz und Spiegelfrequenz verarbeitet. Dabei ist die gegenseitige Beeinflussung der getrennten Frequenzbänder kritisch und deshalb möglichst niedrig zu halten.

B. S. Glance beschreibt unter dem Titel "An Optical Heterodyne Mixer Providing Image-Frequecy Rejection" in der Zeitschrift "Journ. of Lightwave Technology", Heft LT-4, No. 11, vom Nov. 1986, S. 1724 einen optischen Heterodynempfänger mit Spiegelfrequenzunterdrückung und optimaler Nutzung der Leistung des Lokaloszillators. In diesem optischen Heterodynempfänger sind ein Strahlteiler, ein optisch aktives Plättchen für eine $90°$-Drehung der Polarisation entgegen dem Uhrzeigersinn, ein Polarisationsstrahlteiler, zwei Photodioden, zwei Zwischenfrequenzfilter und ein Zwischenfrequenzkoppler vorgesehen. Weiters ist eine rechnerische Überprüfung eines optischen Heterodynempfängers skizziert und vorgeschlagen.

In der Folge wurde nach weiteren Lösungsmöglichkeiten gesucht, insbesondere für ein linear polarisiertes Empfangssingal.

Die Aufgabe der Erfindung besteht darin, eine Vorrichtung anzugeben, die insbesondere auch über große Entfernungen einen optischen Heterodynempfang für ein linear polarisiertes Empfangssignal ermöglicht mit einem möglichst geringen Abstand der Nachrichtenkanäle im optischen Spektralbereich und einer optimalen Nutzung der Signalleistung.

Diese Aufgabe wird gelöst durch die im Patentanspruch 1 angegebenen kennzeichnenden Merkmale.

Diese Aufgabe ist dadurch gelöst, daß im optischen Instrument eine Polarisationsänderung vorgesehen ist gemäß einer Lamdahalbeplatte mit einer Eiaenpolarisationsrichtung übereinstimmend mit einem im optischen Mischsignal vorgesehenen linear polarisierten Signalanteil des Empfangssignals.

Diese erfindungsgemäße Vorrichtung ist für eine Heterodynübertragung auch über größere Entfernungen vorteilhaft einsetzbar. Dies ist besonders darin begründet, daß ein linear polarisiertes Empfangssignal vorgesehen ist, das auch über größere Entfernungen vorteilhaft einfach bei einer Verwendung von polarisationserhaltenden Lichtfasern zu übertragen ist. Auch bei einer Verwendung von nicht polarisationserhaltenden Lichtfasern ist durch Polarisationsstellglieder am Empfangsort die vorgesehene lineare Polarisation des Empfangssignals auf vorteilhaft einfache Weise herstellbar. Allenfalls verbleibt in den genannten Fällen eine geringfügige Restelliptizität.

Die dabei im Einsatzfall auftretende reale Polarisation des Empfangssignals mit ihrer Winkelschwankung und mit ihrer Phasenschwankung einer im allgemeinen Fall elliptischen Polarisation ermöglicht es vorteilhaft, berechenbare Grenzwerte für die Spiegelfrequenzunterdrückung einzuhalten.

Ein stabiler Lokaloszillator liefert ein zirkular polarisiertes Lokaloszillatorsignal, dessen Polarisationsschwankungen vorteilhaft derart gering gehalten werden können, daß sie vernachlässigt werden können.

In einem Signalmischer werden Eingangssignal und Lokaloszillatorsignal gemischt, und das auf diese Weise erzeugte Mischsignal wird in zwei Mischsignalwegen weitergeleitet. Wie bekannt, ist in jedem Mischsignalweg eine zumindest näherungsweise gleiche Signalleistung erforderlich. Dies ist bei der Auswahl und Anordnung des Signalmischers geeignet zu berücksichtigen. Ebenso ist bekanntlich bei der Mischung eine Abänderung der Polarisationseigenschaften der gemischten Signale hintanzuhalten. Die Mischsignale für die beiden Mischsignalwege weisen demnach einen bis auf unbedeutende Phasenunterschiede gleichen und vom Empfangssignal zu erhaltenden linear polarisierten Signalanteil mit der Empfangssignalfrequenz auf, und ebenso einen bis auf unbedeutende Phasenunterschiede gleichen und vom Lokaloszillatorsignal zu erhaltenden zirkular polarisierten Signalanteil mit der Lokaloszillatorfrequenz.

Durch eine erfindungsgemäß vorgesehene Lamdahalbeplatte oder eine äquivalente optische Einrichtung im einen Mischsignalweg wird die Polarisation dieses Mischsignals abgeändert. Vorteilhafterweise kann dabei das gemäß einer Lamdahalbeplatte vorgesehenes optisches Instrument auf die Wellenlänge des Lokal oszillatorsignales abgestimmt sein, insbesondere bei im vorgesehenen Frequenzbereich des Eingangssignals nicht frequenzisotropen Eigenschaften des optischen Instrumentes. Eine bekannt einfach herstellbare Lamdahalbeplatte ist als optisches Instrument vorteilhaft einsetzbar.

Die Anordnung der Lamdahalbeplatte oder eines äquivalenten optischen Instrumentes erfolgt im Strahlengang des betroffenen Mischsignalweges in der Weise, daß ihre Eigenpolarisationsrichtung übereinstimmt mit dem aus dem vorgesehenen Empfangssignal zu erhaltenden linear polarisierten Signalanteil des Mischsignales mit der Empfangssignalfrequenz.

Nach Passieren der Lamdahalbeplatte ist von dem aus dem Lokaloszillatorsignal zu erhaltenden und zirkular polarisierten Signalanteil des betroffenen Mischsignals mit der Lokaloszillatorfrequenz ein mit entgegengesetzter Drehrichtung zirkular polarisierter Signalanteil des Mischsignals mit der Lokaloszillatorfrequenz gebildet.

Der vom vorgesehenen Empfangssignal zu erhaltende linear polarisierte Signalanteil des Mischsignals mit der Empfangssignalfrequenz erfährt keine Änderung seiner Polarisation, da seine Polarisationsrichtung mit der Eigenpolarisationsrichtung der Lamdahalbeplatte oder des äquivalenten optischen Instrumentes übereinstimmt. Bei einer Abweichung der vorgesehenen linearen Polarisation des Eingangssignals ist eine jedoch geringfügige Änderung der Polarisation des vom Eingangssignal erhaltenen Signalanteils des Mischsignals mit der Empfangssignalfrequenz gegeben.

Vorteilhaft für eine Erzielung einer optimalen Signalleistung des Zwischenfrequenzausgangssignals ist eine Abstimmung der Weglängen von beiden Mischsignalwegen zwischen dem Signalmischer und dem Polarisationsmischer. Dabei erfolgt diese Abstimmung bezogen auf eine mittlere Zwischenfrequenz. Auch näherungsweise abgestimmte Weglängen erbringen bereits eine Verbesserung der Signalleistung. Hierfür ist abzustimmen auf einen Unterschied der Weglänge für einen Gangunterschied von einer halben Wellenlänge einer mittleren Zwischenfrequenz.

Für eine optimale Auswertung einer im Signalmischer erzeugten Zwischenfrequenz ist eine besondere Ausführung oder Anordnung des Polarisationsmischers vorteilhaft. Der Polarisationsmischer mischt oder überlagert von zwei erhaltenen optischen Signalen aus den beiden Mischsignalwegen deren Polarisationsanteile bezüglich orthogonaler Polarisationsrichtungen. Die nach Passieren des Polarisationsmischers erhaltenen Polarisationsmischsignale enthalten einen linearen Polarisationsanteil einer Polarisationsrichtung eines Mischsignales und den hierzu orthogonalen Polarisationsanteil der hierzu orthogonalen Polarisationsrichtung des jeweils anderen Mischsignals. Dabei ist der Polarisationsmischer vorteilhafterweise in der Weise anzuordnen, daß der vom vorgesehenen Empfangssignal zu erhaltende linear polarisierte Signalanteil eines Mischsignales mit der Empfangssignalfrequenz auf beide Polarisationsmischsignale durch den Polarisationsmischer zumindest näherungsweise gleich aufgeteilt wird. Dies ist der Fall, wenn die vorgesehene Polarisationsrichtung des vom Emfpangssignal zu erhaltenden linear polarisierten Signalanteil des Mischsignals mit der Empfangssignalfrequenz mit beiden Eigenpolarisationsrichtungen des Polarisationsmischers einen gleichen Winkel einschließt. Dies gilt für beide Mischsignale bzw. beide Mischsignalwege. Auch eine näherungsweise vorgenommene diesbezüglich abgestimmte Anordnung des Polarisationsmischers erbringt bereits Vorteile für die Spiegelfrequenzunterdrückung.

Im Anschluß daran erfolgt die Detektion der Polarisationsmischsignale. Durch diese Umwandlung zu elektronischen Signalen sind elektronische Zwischenfrequenzbandpaßfilter anwendbar. Güte und Trennschärfe elektronischer Bandpaßfilter erreichen bekanntlich sehr gute und günstige Werte. Gleiches gilt für elektronische Zwischenfrequenzkoppler. Aus den genannten Gründen erbringt die Verwendung einer elektronischen Zwischenfrequenzstufe Vorteile. Dabei sind eben diese Vorteile einer verbesserten Trennung und Verarbeitung von Signalen in einem Zwischenfrequenzbereich für den Einsatz einer Heterodynübertragung maßgeblich und häufig ausschlaggebend gegenüber alternativen Lösungen. Die Güte eines optischen Filters zur direkten Trennung optischer Frequenzsignale müßte um Größenordnungen höher sein.

Wie bekannt, werden vom Zwischenfrequenzkoppler beide aus den Zwischenfrequenzbandpaßfiltern erhaltene Zwischenfrequenzmischsignale miteinander verkoppelt zu Zwischenfrequenzausgangssignalen. Zu einem Zwischenfrequenzmischsignal wird dabei ein gleicher Signalanteil in beide Zwischenfrequenzausgangssignale eingekoppelt oder eingemischt. Bei einem zumindest näherungsweise gleichen Signalanteil ergeben sich daraus Vorteile für eine verbesserte Auswertung von aufgetretenen Spiegelfrequenzsignalen für eine Spiegelfrequenzunterdrückung.

Vorteilhaft ist die Verwendung eines bekannt einfach herstellbaren 90°-Hybridkopplers in einer Ausführungsform eines 3dB-Kopplers für Zwischenfrequenzsignale.

Vorteilhaft ist die Verwendung eines bekannt einfach herstellbaren 3dB-Strahlteilers als Signalmischer.

Vorteilhaft ist die Verwendung einer bekannt einfach herstellbaren Photodiode als Signaldetektor.

Vorteilhaft einfach herstellbar ist ein Polarisationsstrahlteiler als Polarisationsmischer.

Vorteilhaft ist die Verwendung einer bekannt einfach herstellbaren Lamdahalbeplatte im optischen Instrument des einen Mischsignalweges. Möglich ist auch eine Verwendung eines äquivalenten optischen Instrumentes, insbesondere betreffend einen Aufbau aus Mitteln der Faseroptik oder aus Mitteln der integrierten Bauteileoptik oder der Wellenleiteroptik. Besondere Vorteile ergeben sich bei Verwendung eines bekannten 3dB-Lichtfaserkopplers ebenso wie bei Verwendung eines bekann ten Lichtfaserpolarisationskopplers dadurch, daß die Lichtstrahlen in Signalwegen aus Lichtfasern geführt sind, wodurch eine Justierung beim Aufbau wenig bedeutsam ist. Erforderlich ist in diesem Anwendungsfall eine genaue Justierung oder Abstimmung der linearen Polarisation des Empfangssignals mit der Eigenpolarisationsrichtung des optischen Instrumentes gemäß Lamdahalbeplatte, welches ebenso aus bekannten Mitteln der Faseroptik herstellbar und einsetzbar ist.

Ein vorteilhaft kleiner Aufbau ist bei Verwendung von bekannten Mitteln der integrierten Optik erzielbar. Signalmischer, Polarisationsmischer und optisches Instrument gemäß Lamdahalbeplatte sind in bekannter Weise aus Mitteln der integrierten Optik auf einem integriert optischen Bauelement herstellbar.

Ein vorteilhaft kleiner Aufbau für die elektronische Zwischenfrequenzstufe ist bei Verwendung von bekannten Mitteln erzielbar. Optische Signaldetektoren, Zwischenfrequenzbandpaßfilter und Zwischenfrequenzkoppler sind in bekannter Weise aus integriert elektronischen Bauelementen herstellbar.

Ein vorteilhaft kleiner Aufbau ist für die gesamte Vorrichtung zum Heterodynempfang auf einem integriert optoelektronischen Bauelement mit bekannten Mitteln für die Herstellung optoelektronischer Bauelemente erzielbar. Erforderlich ist in diesem Anwendungsfall, wie in jedem Anwendungsfall, eine Justierung oder Abstimmung der linearen Polarisation des Empfangssignals.

Die Erfindung wird anhand einer Figur und mit einem Ausführungsbeispiel näher erläutert.

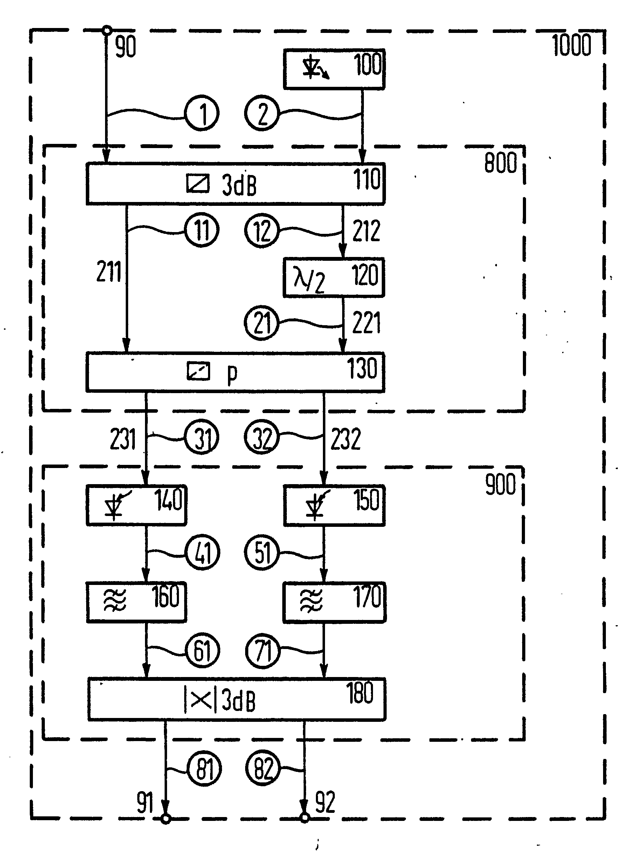

Die Figur zeigt ein Blockschaltbild eines optischen Heterodynempfängers.

Wie die Figur zeigt, besteht der optische Heterodynempfänger 1000 aus einer optischen Mischstufe 800, einer elektronischen Zwischenfrequenzstufe 900, einem Lokaloszillator 100, einem Eingang 90, für das Empfangssignal 1, und zwei Ausgängen 91 und 92 für die Zwischenfrequenzausgangssignale 81 und 82.

Zum besseren Verständnis der Erfindung ist beim Ausführungsbeispiel eine Vorrichtung mit einer Anordnung gemäß der klassischen Strahlenoptik beschrieben, welche insbesondere den Vorteil hat, daß die Vorrichtung aus einfach herstellbaren Mitteln aufgebaut ist, wodurch jederzeit eine experimentelle Überprüfung der Funktionsweise realisierbar ist.

Die optische Mischstufe besteht aus einem 3dB-Strahlteiler 110, einem Polarisationsstrahlteiler 130 und einem ersten und direkten Mischsignalweg 211 und einem zweiten Mischsignalweg 212 und 221 mit einer in diesem Mischsignalweg 212 und 221 angeordneten Lamdahalbeplatte 120.

Die elektronische Zwischenfrequenzstufe 900 besteht aus zwei Photodioden 140 und 150 für die Detektion der Polarisationsmischsignale 31 und 32 aus beiden Polarisationsmischsignalwegen 231 und 232, mit je einem nachgeschalteten Zwischenfrequenzbandpaßfilter 160 und 170 und einem Zwischenfrequenzkoppler 180, der ein 90°-Hybridkoppler ist, in einer 3dB-Ausführungsform.

Der Lokaloszillator 100 besteht aus einer Laserdiode, die ein frequenzstabiles optisches Signal aussendet, das nachfolgend zu einem exakt linkszirkular polarisierten Lichtsignal eines Lichtstrahles geformt wird mit Hilfe eines linearen Polarisationsfilters und einer Lamdaviertelplatte. Ein stabiles Lokaloszillatorsignal 2 steht somit für die weitere Verarbeitung zur Verfügung. Besonders zu beachten ist dabei eine genaue und stabile Einhaltung des vorgesehenen Polarisationszustandes.

Das optische Empfangssignal 1 wird am Eingang 90 eingeleitet. Es weist eine zumindest näherungsweise lineare Polarisation auf. Es wird vorausgesetzt, daß die zeitlichen Schwankungen oder Abweichungen von einer vorgesehenen und angestrebten linearen Polarisation innerhalb von meßbaren oder angebbaren Grenzwerten einer real fallweise vorliegenden empfangenen elliptischen Polatisation sind, deren maximale Winkelabweichung oder Winkelschwankung und maximale Phasenabweichung oder Phasenschwankung begrenzt zu erwarten ist. Diese Schwankungen und Abweichungen beziehen sich dabei auf eine für einen optimalen Empfang vorgesehene Richtung einer linearen Polarisation des Empfangssignals 1. Diese Richtung der linearen Polarisation schließt bei diesem Ausführungsbeispiel einen Winkel von 45° ein mit einer Ebene, in der dieser Heterodynempfänger 1000 aufgebaut ist und auf die die Signale 11, 12 und 21 der optischen Signalwege 211, 212, 221, 231 und 232 bezogen sind.

Das optische Empfangssignal 1 und das optische Lokaloszillatorsignal 2 werden in den Strahlteiler 110 eingeleitet. Diese beiden optischen Signalwege schließen bei diesem Ausführungsbeispiel untereinander einen rechten Winkel ein und mit der teilenden Fläche des Strahlteilers 110 einen Winkel von je 45°. Der Strahlteiler 110 ist als ein 3dB-Strahlteiler ausgeführt. Somit durchdringt ein Signalanteil die teilende Fläche an der der andere, und zwar gleich große Signalanteil reflektiert wird, und zwar ohne daß dabei der Polarisationszustand verändert wird. Die Anordnung der teilenden Fläche des Strahlteilers 110 erfolgt dabei senkrecht zur Ebene, in der der Heterodynempfänger 1000 aufgebaut ist und im Kreuzungspunkt des eingeleiteten Empfangssignals 1 mit dem eingeleiteten Lokaloszillatorsignal 2, wird der transmittierte Signalanteil des Empfangssignals 1 mit dem reflektierten Signalanteil des Lokaloszillatorsignals 2 zu einem Mischsignal 11 überlagert oder gemischt und ist im Mischsignalweg 211 enthalten. Ebenso wie der reflektierte Signalanteil des Empfangssignals 1 mit dem transmittierten Signalanteil des Lokaloszillatorsignals 2 zu einem Mischsignal 12 im Mischsignalweg 212 überlagert oder gemischt ist.

Im Mischsignalweg 212 ist bei diesem Ausführungsbeispiel eine Lamdahalbeplatte 120 angeordnet, und zwar so, daß ihre Eigen polarisationsrichtung mit der Ebene, in der der Heterodynempfänger 1000 aufgebaut ist, einen Winkel von 45° einschließt, welcher identisch ist mit dem Winkel, den die Richtung der linearen Polarisation des vorgesehenen Empfangssignals 1 mit dieser Ebene einschließt. Somit wird der vorgesehen Signal anteil des Mischsignals 12, der aus dem Empfangssignal 1 erhalten ist, in seiner linearen Polarisation nicht geändert. Hingegen wird der vom Lokaloszillatorsignal erhaltene links zirkular polarisierte Signalanteil des Mischsignals 12 beim Passieren der Lamdahalbeplatte zu einem rechtszirkular polarisierten Signalanteil des Mischsignals 21 im Mischsignalweg 221 geändert. Dabei ist die Lamdahalbeplatte 120 besonders daraufhin abgestimmt, daß der exakt linkszirkular polarisierte Signalanteil des Mischsignals 12, der vom Lokaloszillatorsignal 2 erhalten ist, in einen exakt rechts zirkular polarisierten Signalanteil des Mischsignals 21 geändert wird.

Beide Mischsignale 11 und 21 werden in den Polarisationsstrahlteiler 130 eingeleitet. Dabei sind die optischen Weglängen 212 und 221 für das Mischsignal 12 und 21 in Summe um zumindest näherungsweise 5 cm länger als die Weglänge 211 für das Mischsignal 11. Dies entspricht einer halben Wellenlänge eines Zwischenfrequenzsignals von 3 GHz. Der Heterodynempfänger 1000 dieses Ausführungsbeispiels ist dadurch für einen Zwischenfrequenzbereich in der Umgebung einer mittleren Zwischenfrequenz von 3 GHz ausgelegt zur Erzielung einer optimalen Signalleistung.

Der Polarisationsstrahlteiler 130 trennt orthogonale Polarisationsanteile beider Mischsignale 11 und 21 aus den beiden Mischsignalwegen 211 und 221. Diese beiden Mischsignale werden dabei so in den Polarisationsstrahlteiler 130 eingeleitet, daß ihre Mischsignalwege 211 und 221 untereinander einen rechten Winkel und mit der polarisationstrennfläche des Polarisationsstrahlteilers 130 einen Winkel von je 45° einschließen. Der Polarisationsstrahlteiler 130 ist dabei so ausgeführt und angeordnet, daß ein linearer Polarisationsanteil des Mischsignals 11 parallel zur Ebene, in der der Heterodynempfänger 1000 aufgebaut ist, vollständig transmittiert wird, und ein hierzu orthogonaler Polarisationsanteil des Mischsignals 11 vollständig reflektiert. Ebenso wird ein linearer Polarisationsanteil des Mischsignals 21 parallel zur Ebene, in der der Heterodynempfänger 1000 aufgebaut ist, vollständig transmittiert und ein hierzu orthogonaler Polarisationsanteil des Mischsignals 21 vollständig reflektiert.

Die Anordnung der Polarisationstrennfläche des Polarisationsstrahlteilers 130 erfolgt dabei senkrecht zur Ebene, in der der Heterodynempfänger 1000 aufgebaut ist, und in einem Kreuzungspunkt der beiden eingeleiteten Mischsignale 11 und 21, so daß der transmittierte Polarisationsanteil des Mischsignals 11 mit dem reflektierten Polarisationsanteil des Mischsignals 21 zu einem Polarisationsmischsignal 31 überlagert oder gemischt ist im Polarisationsmischsignal 231, ebenso wie der reflektierte Polarisationsanteil des Mischsignals 11 mit dem transmittierten Polarisationsanteil des Mischsignals 21 zu einem Polarisationsmischsignal 32 überlagert oder gemischt ist im Polarisationsmischsignalweg 232.

Über getrennte und gleichlange Polarisationsmischsignalwege 231 und 232 werden die Polarisationsmischsignale 31 und 32 zu dert Photodioder 140 und 150 Geführt für die Detektion der Detektionssignale 41 und 51. Aus diesen Detektionssignalen 41 und 51 werden getrennt durch je einen nachgeschalteten Zwischenfrequenzbandpaßfilter 160 und 170 die Zwischenfrequenzmischsignale 61 und 71 gefiltert.

Für eine Auswertung der bei der Mischung im Signalmischer gebildeten Spiegelfrequenzsignalanteile werden beide Zwischenfrequenzmischsignale 61 und 71 in einem Zwischenfrequenzkoppler 180 verkoppelt zur Bildung der Zwischenfrequenzausgangssignale 81 und 82, die an den Ausgängen 91 und 92 für eine Verarbeitung zur Verfügung stehen. Dabei ist in diesem Ausführungsbeispiel der Zwischenfrequenzkoppler ein 90°-Hybridkoppler in einer Ausführung eines 3dB-Kopplers.

Für dieses Ausführungsbeispiel erreicht der optische Heterodynempfänger 1000 einen Leistungsquotienten, der Signalleistungen betreffend Spiegelfrequenzunterdrückung in den Zwischenfrequenzausgangssignalen 81 und 82, der abhängig ist davon, in wieweit eine für das Empfangssignal 1 vorgesehene lineare Polarisation eingehalten ist.

Bei einer elliptischen Polarisation mit einer Abweichung x für den Winkel $\beta$, der das Amplitudenverhält-

nis für die betrachteten orthogonalen Polarisationsrichtungen einer Darstellung der elliptischen Polarisation charakterisiert, und mit einer Abweichung y für die Phasenlage der Amplitudenmaxima beider Polarisationsrichtungen der Darstellung der elliptischen Polarisation einerseits parallel und andererseits orthogonal zur Ebene, in der der Heterodynempfänger 1000 aufgebaut ist, erhält man folgenden beispielsweise experimentell überprüfbaren Leistungsquotienten Q betreffend Spiegelfrequenzunterdrückung

$$Q \;=\; \frac{1-\cos 2x \cdot \cos 2y}{1+\cos 2x \cdot \cos 2y}$$

Wird also beispielsweise das Empfangssignal 1 mit einer linearen Polarisation am Eingang 90 empfangen, die mit der Ebene, in der der Heterodynempfänger 1000 aufgebaut ist, einen Winkel $\beta$ von 44° einschließt, statt des vorgesehenen Winkels von 45°, und die Abweichung x demnach 1° beträgt, bei einem Wert der Abweichung y von 0° für ein linear polarisiertes Empfangssignal 1, so ist der Leistungsquotient Q = 0,0003, was einer Spiegelfrequenzunterdrückung von -35 dB entspricht.

Anderenfalls wird bei einem beispielsweise elliptisch polarisierten Empfangssignal 1 mit einem gleichen Amplitudenverhältnis der Amplitudenmaxima einer Polarisationsrichtung parallel und einer Polarisationsrichtung orthogonal zur Ebene, in der der Heterodynempfänger 1000 aufgebaut ist, also einen Wert der Abweichung x = 0° und mit einer Abweichung y für die Phasenlage von 1°, so ist der Leistungsquotient Q ebenfalls gleich 0,0003, was ebenfalls einer Spiegelfrequenzunterdrückung von -35 dB entspricht.

Bei einer Betrachtung der Polarisation des Empfangssignals 1 anhand der Poincaré-Kugel zeigt sich, daß zu einem bestimmten Wert des Leistungsquotienten Q betreffend Spiegelfrequenzunterdrückung eine von der vorgesehenen linearen Polarisation abweichende Polarisation des Empfangssignals 1 auf der Poincaré-Kugel auf einem Kreis liegt, dessen Mittelpunkt bestimmt ist durch die für das Empfangssignal 1 vorgesehene lineare Polarisation eines Winkels von 45° zur Ebene, in der der Heterodynempfänger 1000 aufgebaut ist. Innerhalb dieses Kreises für Polarisationszustände werden die Anforderungen an die Spiegelfrequenzunterdrückung übertroffen, und kleinere Werte des Leistungsquotienten Q betreffend Spiegelfrequenzunterdrückung erzielt.

In der folgenden Tabelle ist die Änderung des Winkels $\beta$ der Polarisationsrichtung des linear polarisierten Empfangssignals 1 in einem Intervall von $\beta_{MIN}$ bis $\beta_{MAX}$ betrachtet und dargestellt, entsprechend einer maximalen Abweichung x = $\pm$ $x_{MAX}$ und y = 0, mit den gerundeten Zahlenangaben für den zugehörigen maximalen Wert des Leistungsquotienten $Q_{MAX}$, neben einer gerundeten Wertangabe in dB betreffend Spiegelfrequenzunterdrückung.

| $\beta_{MIN}$ - $\beta_{MAX}$ | $x_{MAX}$ | $Q_{MAX}$ | 10.LOG $Q_{MAX}$ |
|---|---|---|---|
| 44,999 - 45,001 | 0,001 | 0,00000000035 | - 95 dB |
| 44,99 - 45,01 | 0,01 | 0,000000031 | - 75 dB |
| 44,9 - 45,1 | 0,1 | 0,000003 | - 55 dB |
| 44,0 - 46,0 | 1,0 | 0,0003 | - 35 dB |
| 40 - 50 | 5 | 0,007 | - 21 dB |
| 35 - 55 | 10 | 0,03 | - 15 dB |
| 30 - 60 | 15 | 0,07 | - 11 dB |

Dies ist experimentell auf einfache Weise demonstrierbar. Auch eine rechnerische Überprüfung dieses Ausführungsbeispieles ist in bekannter Weise durchführbar und beispielsweise in der eingangs erwähnten Druckschrift skizziert und vorgetragen.

## Ansprüche

1. Vorrichtung (1000) zu einem Heterodynempfang mit einer elektronischen Zwischenfrequenzstufe (900) und mit einer optischen Mischstufe (800), in der ein Signalmischer (110) vorgesehen ist, der mit einem Eingang (90) für ein zumindest näherungsweise linear polarisiertes Empfangssignal (1) zumindest einer Empfangssignalfrequenz und mit einem Lokaloszillator (100) für ein zirkular polarisiertes Lokaloszillatorsignal (2) einer Lokaloszillatorfrequenz verbunden ist, wobei der Signalmischer (110) mit einem Polarisationsmischer (130) über zwei Mischsignalwege (211, 212, 221) für im Signalmischer (110) zu bildende optische Mischsignale (11, 12) verbunden ist mit einem optischen Instrument (120) im einen Mischsignalweg (212, 221), **dadurch gekennzeichnet,** daß im optischen Instrument (120) eine Polarisationsänderung vorgesehen ist gemäß einer Lamdahalbeplatte mit einer Eigenpolarisationsrichtung übereinstimmend mit einem im optischen Mischsignal (12) vorgesehenen linear polarisierten Signalanteil des Empfangssignales (1).

2. Vorrichtung nach Anspruch 1, **gekennzeichnet durch** zwei Zwischenfrequenzsignalwege (231, 232) der Zwischenfrequenzstufe (900), in welcher je ein optischer Signaldetektor (140, 150), je ein nachgeschaltetes Zwischenfrequenzbandpaßfilter (160, 170) und ein nachgeschalteter Zwischenfrequenzkoppler (180) mit zwei Ausgängen (91, 92) vorgesehen ist.

3. Vorrichtung nach einem der genannten Ansprüche, **dadurch gekennzeichnet,** daß das optische Instrument (120) auf die Wellenlänge des Lokaloszillatorsignals abgestimmt ist.

4. Vorrichtung nach einem der genannten Ansprüche, **dadurch gekennzeichnet,** daß das optische Instrument (120) eine Lamdahalbeplatte ist.

5. Vorrichtung nach einem der genannten Ansprüche, **gekennzeichnet durch** zumindest näherungsweise für eine vorgesehene mittlere Zwischenfrequenz gleichlange Zwischenfrequenzsignalwege (231, 232) zwischen den Polarisationsmischer (130) und den optischen Detektoren (140, 150).

6. Vorrichtung nach einem der genannten Ansprüche, **gekennzeichnet durch** einen Unterschied einer Weglänge für die beiden Mischsignalwege (211, 212, 221) zwischen dem Signalmischer (110) und dem Polarisationsmischer (130) zur Erzielung eines Gangunterschiedes von zumindest näherungsweise einer halben Wellenlänge einer mittleren Zwischenfrequenz.

7. Vorrichtung nach einem der genannten Ansprüche, **dadurch gekennzeichnet,** daß der Polarisationsmischer (130) einen linearen Polarisationsanteil des einen Mischsignals (11, 21) mit einem hierzu orthogonalen Polarisationsanteil des zweiten Mischsignals (21, 11) zu einem Polarisationsmischsignal (31, 32) vereinigt.

8. Vorrichtung nach einem der genannten Ansprüche, **dadurch gekennzeichnet,** daß der Polarisationsmischer (130) ein optischer Polarisationsstrahlteiler ist, der einen linearen Polarisationsanteil eines Lichtstrahles reflektiert und einen hierzu orthogonalen Polarisationsanteil transmittiert.

9. Vorrichtung nach einem der genannten Ansprüche, **dadurch gekennzeichnet,** daß die Eigenpolarisationsrichtungen des Polarisationsstrahlteilers gleiche Winkel einschließen, mit dem aus dem Empfangssignal (1) zu erhaltenden linear polarisierten Signalanteil des optischen Mischsignals (12, 21).

10. Vorrichtung nach einem der genannten Ansprüche, **dadurch gekennzeichnet,** daß der Signalmischer (110) ein 3dB-Strahlteiler ist.

11. Vorrichtung nach einem der genannten Ansprüche, **dadurch gekennzeichnet,** daß der optische Signaldetektor (140, 150) eine Photodiode ist.

12. Vorrichtung nach einem der genannten Ansprüche, **dadurch gekennzeichnet,** daß der Zwischenfrequenzkoppler ein $90°$-Hybridkoppler ist in einer Ausführungsform eines 3dB-Kopplers.

13. Vorrichtung nach einem der genannten Ansprüche, **dadurch gekennzeichnet,** daß der Signalmischer (110) ein 3dB-Lichtfaserkoppler ist.

14. Vorrichtung nach einem der genannten Ansprüche, **dadurch gekennzeichnet,** daß der Polarisationsmischer (130) ein Lichtfaser-Polarisationskoppler ist.

15. Vorrichtung nach einem der genannten Ansprüche, **dadurch gekennzeichnet,** daß die optische Mischstufe (800) ein integriert optisches Bauelement ist.

16. Vorrichtung nach einem der genannten Ansprüche, **dadurch gekennzeichnet,** daß die elektronische Zwischenstufe (900) ein integriert elektronisches Bauelement ist.

17. Vorrichtung nach einem der genannten Ansprüche, **dadurch gekennzeichnet,** daß die gesamte Vorrichtung zum Heterodynempfang (1000) ein integriert optoelektronisches Bauelement ist.